# EUROPEAN PATENT APPLICATION

(11) **EP 1 152 330 A1**
(43) Date of publication of application: **07.11.2001**
(21) Application number: 00640006.3
(22) Date of filing: 04.05.2000
(51) Int. Cl.: G06F 9/44

(54) **Process for automatically creating and controlling a set of graphical objects in a client server environment**

(71) Applicant: Carels Innovative Software, BVBA/SPRL, 9051 Gent (BE)
(72) Inventor: Carels, Dirk, 9091 Melle (BE); Verhoest, Steven, 9050 Gentbrugge (BE)
(74) Representative: Schuffenecker, Thierry

(57) **Abstract**

Process for assembling on a client a set of graphical objects in a client-server environment, said library being compiled in order to produce a document which is dedicated to a container or plug-in associated with a browser in a client machine. A library of graphical objects or components is arranged, each component having attributes, operations and cloning capability for the purpose of assembling a set of instances of said objects on the screen. The cloning process of the different object is controlled by means of cloning instructions contained in a set of property files loaded on the server or generated at run-time by the server for the purpose of producing a wide variety of different instances and graphical screens. Each instance is associated with one property file and the selection by the user of one instance on the client causes the triggering of the associated property file and the control of a new cloning process. The invention can be used in a client-server application for accessing a data base and the instances receive, during their cloning process, their attributes, operations, including data from the data base.

## Description

### Technical field of the invention

The invention relates to communication systems and more particularly to a process for automatically generating and controlling a set of graphical objects in a client server environment.

### Background art

The Internet - or intranet - network and the World Wide Web have been subject of a huge development. The web has become the basic and predominant way for publishing and disseminating information throughout the world and, today, no industrial nor business company or organization of any importance is developing its activities without elaborating a web site. The impact of the Internet is such that any computer which is marketed in the world is now fitted with an information access/management tool such as a browser, for instance Netscape manufactured by Netscape Inc., or Internet Explorer (manufactured by Microsoft Corporation of Redmond, Washington, U.S.A.). The browser is used for accessing the Internet network and constitutes the heart of the interaction between the latter and the user's machine. New additional plug-in codes are continuously enriching and expanding the browsers with new functions and new capabilities.

In parallel, the *HyperText Mark-up Language* (HTML) format has become a standard for publishing the information through the world. The HTML format, which is derived from the previous Standardized General Markup Language (SGML) format, has shown to be adapted for the transmission and the publication of basic and relatively static information. Thanks to the Hypertext link properties of HTML document and the decomposition of the basic information in different small elements, the HTML pages are easily transmitted through the network even for users who have a low-speed modem connection.

If the HTML format is generally recognized to be effective and adapted for basic and relatively static information, such as that which is involved in the elaboration of electronic catalogs or for supporting electronic business, it however suffers some strong disadvantages which are to be considered in the perspective of the requirements of complex client-server applications, and above all, sophisticated business applications.

A first and essential drawback consists in the static structure and arrangement of the individual HTML pages. No amendment is possible to one individual element of the page. Any modification which is needed to be brought to one elementary piece of information which is being displayed to the user causes the discarding of the whole HTML page by the browser. Whatever the importance of the modification is, the whole page is to be dropped and the browser has to elaborate a HyperText Transfer Protocol (HTTP) request for requesting a new HTML page and has to wait until it receives it. When the user is surfing, the browser executes a continuous refresh processing of the HTML pages. Obviously this entails the immediate consequence that web site designers have to elaborate, to construct, to store and to maintain in the server a great number of different pages. Above all, the traffic is substantially increased since complete HTML pages need to be transmitted again and again, what results in a non negligible waste of time for users, particularly for those having a low-speed modem attachment. The organization of the HTML pages in *frames* may improve slightly the situation, but not without the cost of additional drawbacks. If a user is prepared to accept an additional delay when he is jumping from one site to another one, the same delay which is involved in the same web site is rapidly felt excessive.

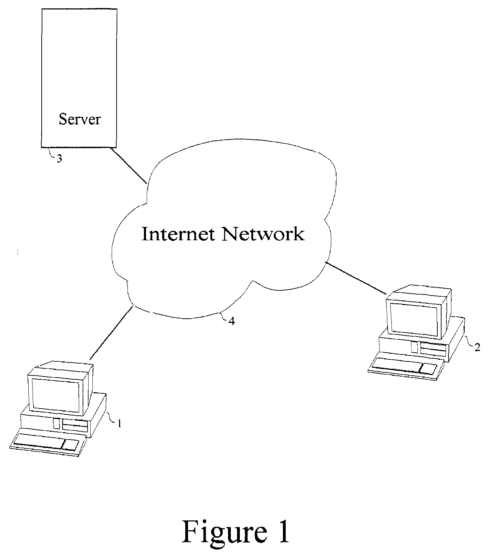

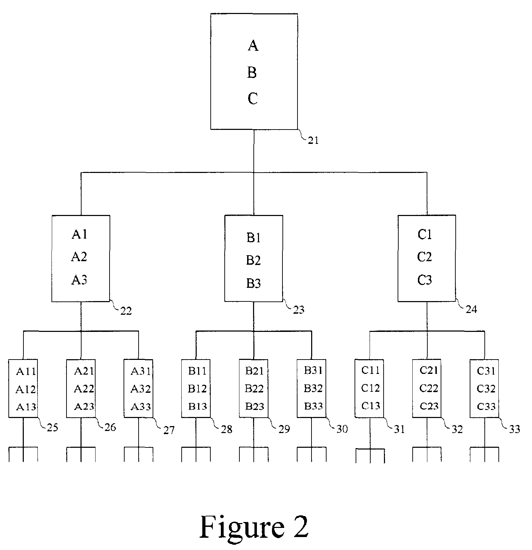

It should be noticed that not only the delay for getting an access to the desired information is being affected, but also the overall relationship and interaction between the user and the web site. Comfort and ease in the access of the server are strongly and badly affected in the usual HTML way. For instance, if the user is not aware of the particular location of a HTML page where he may find the information he is looking for, he might have to consult dozens of pages within the same web site in order to identify the precise location of the page he needs. Considering for example the client-server environment which is represented in figure 1. Two clients, respectively client 1 and client 2, have an access to a server 3 via a Global Communication Network 4, such as for instance an Internet or Intranet network. In this situation, each client is fitted with a browser for handling the Transport Control Program - Internet Protocol (TCP/IP) necessary for requesting HTML pages to the server 3. Assuming that the web site has the structure which is depicted in figure 2, a home page 21 contains three elementary hyperText links A, B and C which respectively lead the browser to request and load a first HTML page 22, a second HTML page 23 and a third HTML page 24. First HTML page 22 itself comprises three hypertext links A1, A2 and A3 which respectively lead the browser to request and load a page 25 (comprising links A11, A12 and A13), a page 26 (with links A21, A22 and A23) and a page 27 (with links A31, A32 and A33). Similarly, second HTML page 23 displays three hypertext links B1, B2 and B3 which respectively lead to a page 28 (comprising links B11, B12 and B13), a page 29 (with links B21, B22 and B23) and a page 30 (with links B31, B32 and B33). Finally, the third HTML page 24 includes links C1, C2 and C3 which respectively causes the request and the loading by the browser of a page 31 (with links C11, C12, C13), a page 32 (with links C21, C22, C23) and finally a page 33 (comprising links C31, C32, C33).
The *tree* or hierarchical structure which is illustrated in figure 2 shows that if the user wishes to get an access to page 25 he will need to successively load home page 21, then page 22. If he now wants to reach page 31, he will need to go back to parent page 22, then again to grand-parent page 21 in order to have the possibility to go down to page 24 and, finally, get an access to the desired page 31. The number of steps for reaching the information is being increased, what results in additional delay and, above all, less comfort in the use of the system. From this very simple example, it is clear that, in addition to the successive delays which are involved by the refresh procedure (particularly if large images are incorporated in the intermediate pages), the general convenience and comfort of the interaction between the user and the server is badly affected.

If that inconvenience can be overlooked when the sole aim of the web site is to present a relatively static information, it is clear that the inconvenience will be felt prohibitive if a complex interaction is required between the client and the server, what is precisely the case of business applications. The HTML format does not fit the sophisticated applications which involve the handling and management of complex data mining structures in a client-server environment, and particularly when the application is designed for accessing a remote data base. By accessing a data base, a user may wish to see, for instance, the different attachments and data relating to one business unit. Particularly, the user may wish to easily add, edit and list the records which are stored within the database in a user-friendly and comfortable way, without excessive access delays. In the usual HTML design, it would be necessary to design a great number of HTML pages for supporting those functions. Additionally, it immediately appears that if the user wishes to edit a data in one field or a form, it would be necessary to load a complete new HTML page - which contains the same basic information - but with a different format for the purpose of highlighting the considered field which may be edited, for instance, and provide the user with a visual feedback confirming that the edit operation is rendered possible. The HTML usual way shows low flexibility when it is required to navigate through complex data mining, and has the consequence of multiplying the number of HTML pages to be elaborated for business applications, and this is much more relevant for data base business applications. The tasks of web designers is substantially increased since they have to create, to elaborate and to maintain an application which involves a great number of HTML pages. If the HTML format is not suited for the remote access and for the handling of complex data structure, the situation can be slightly improved by the use of some languages, such as eXtensible Stylesheet language (XSL) used in conjunction with eXtensible Markup Language (XML).

Obviously, some of these drawbacks could be avoided by reconsidering the opportunity of the HTML format and by preferably using a specific application which would run into the user's computer and which would allow a remote access to the database in a way which is more adapted to the business application requirements. However, this alternative - which is that generally favored in the traditional finance and banking applications - requires an installation procedure of a specific and dedicated software program in the client machine, what involves the need of an installation CDROM or diskette, as well as a complete setup process for installing the files on the hard disk drive, the loading of Dynamic Library Links (DLL) files, the updating of the registry, the rebooting of the machine, and last but not least, the handling of possible conflicts within the machine... Basically, all the benefits resulting from the existence of the ready-to-use web browser would be lost, and thus the possibility to access a remote database from any basic and generic personal computer.

Therefore, there is a need for a new arrangement which takes advantage of the pre-existing browser within a user's computer, and which allows the creation of highly sophisticated applications, such as business applications with complex data mining structures.

### Summary of the invention

It is an object of the present invention to provide a new arrangement which permits to use in a more efficient way the preexisting browser and which allows an easier design of complex business applications.

It is another object of the present invention to provide a process for generating and controlling a set of graphical components which are to be assembled and displayed through a browser, at run time, and with a minimum amount of traffic being exchanged between the client and the server.

It is still another object of the present invention to provide a process by which it is rendered possible to design a database business application which allows an effective client-server connection via a Global Communication Network, such as, for instance, an Internet or Intranet network.

It is another object of the present invention to provide a new way for navigating into a data structure and, more particularly, a process by which it is made possible to generate and control a menu graphical object being displayed by a browser and which gives a direct access to a complete data structure existing into a database.

It is an object of the present invention to provide a new and effective navigation tool.

These and other objects of the invention are achieved by means of the process which is defined in the set of claims. Basically, there is provided a process for automatically generating and controlling, in a client-server environment, a set of graphical objects which are to be assembled in a plug-in container associated to a web browser and displayed in a client's machine. A library of graphical objects or components - i.e. classes receiving attributes and operations (or behavior) - is being arranged, and each graphical object has the corresponding piece of code for executing said operations, including cloning capability for the purpose of producing instances of the class which are to be assembled within said plug-in container and displayed on the screen in the client's machine, with particular attributes and behavior or operations controlled by a set of Cloning Control Instructions (CCI) being provided by the server. The set of Cloning Control Instructions (CCI) is used for controlling the instantiation of the different objects involved in the corresponding tasks.

The process for automatically generating and assembling the graphical objects into the plug-in container includes the steps of:
- cloning under the control of Cloning Control Instructions (CCI) provided by the server, which are either extracted from a set of property files or also generated at run-time, a set of objects comprised within said library and which are involved by a considered task;
- assigning to each clone the attributes and the operations required by said task in accordance with said Cloning Control Instructions (CCI), said operations including, in response to the selection of said clone by the user, the triggering of a new set of CCI instructions for the purpose of initiating a new cloning process;
- assembling the different clones in one document and opening it into said plug-in container associated to a web browser into the client's machine.

When a user selects one particular clone or instance, a new cloning process under control of a new set of CCI instructions is being invoked. For that purpose a new property file is being triggered or, alternatively, a new run-time process is triggered on the server. Consequently, the new cloning process causes the assembling, within the plug-in container associated to the existing web-browser, a new set of objects or instances which comply with the new task which is being considered. All the objects being assembled includes the attributes, behavior and operations - including data -. All the objects are derived from the classes which exist in the library being embedded within the document opened by the plug-in container. They thus contain all the logic and mechanisms for achieving the desired tasks and only the CCI instructions and triggering commands are needed to be exchanged again during the successive elaboration of graphical screens. Therefore only a very few amount of data is being required for successively assembling the different graphical screens of the business application, what ensures a low time response to the user. This reduces the traffic between the server and the client for assembling the different objects within the plug-in container and, eventually, reduces the navigation delay. When the user makes a selection of one graphical object, the new cloning process causes the automatic generation of a new screen which is dedicated to the following task, what is achieved thanks to the assembling of new instances, with new attributes and operations corresponding to the new task. The new cloning process is executed under the control of appropriate Cloning Control Instructions which are provided by the server.

Since the particular attributes and operations are assigned to each particular instance or object at real time, a same object which is contained in the library can be used for a wide variety of tasks and different screens which are to be constructed and assembled within the plug-in container. The cloning mechanism shows flexibility even for a complex business application because it is no longer required that web designers elaborate, construct and maintain a great number of HTML pages.

Further, each object or instance can be individually controlled by a corresponding set of CCI instructions, what reduces any delay for displaying successive screens, even if the user has a low speed modem attachment.

Preferably, the business application is used for accessing a remote data base and the cloning process is based on CCI instructions which can be either derived from property files or generated at real time by a specific process running on the server. The cloning process produces clones which have attributes and operations, including the data possibly extracted from or loaded into the data base. The cloning process causes instances of the graphical objects to be assembled in the container, when appropriate, with the relevant data to be displayed. Individual controls, behaviours, operations and visualizations of the graphical components are achieved at real time and easily changeable contrary to the usual HTML way.

The cloning mechanism can be used with different objects which can be assembled in the plug-in container.

In one embodiment, the library includes one generic button class which has operations and logic for achieving the assembling of one graphic button into the plug-in container. The generic *button* object receives attributes and operations under control of the CCI instructions. Those CCI instructions are either derived from a property file on the server or, alternatively generated at real-time by the latter for the purpose of assembling into the container and displaying on the screen a relevant instance of a graphical button. The attributes include the name, the size, the color and the position of the *button* which is to be assembled on the screen and within the plug-in container. In addition, the *button* object includes an operation which causes the triggering of one corresponding property file located on the server, for the purpose of executing and controlling new cloning operations required for the next task when the user selects the graphical *button.*

In another embodiment of the invention, the library includes a *combobox* object for producing clones which receive, during the cloning operation, attributes and operations for displaying a selection box in the user's machine, possibly with data extracted from the database. The combobox object includes the logic and mechanism for invoking, in response to the actuation by the user, a new set of CCI instructions extracted from a property file or computed at run-time by the server, for the purpose of causing a new cloning process corresponding to a new task.

In a further embodiment of the invention, the library includes a *listbox* object which has the logic and mechanism for being assembled into the plug-in container. Additionally, each instance of the *listbox* object receives, during the cloning operation, attributes and data extracted from said data base 6, and also operations for particularly invoking, in response to the actuation by the user, a new set of CCI instructions derived from a property file on the server or, alternatively generated by the latter at real-time. Similarly than above, those CCI instructions are used for executing and controlling new cloning operations corresponding to a new task.

In one particular embodiment, the library comprises a graphical *menu* object which is used for assembling within the plug-in container an automatic drill-down menu. The menu object is used for producing clones or instances which receives attributes and operations, as well the cloning capability, and the capability to delegate the cloning capability. Each clone particularly receives a name during the its cloning process, and the possibility to generate new clones. Therefore, the cloning process causes the assembling within the plug-in container of a set of instances which are hierarchically arranged and displayed to the user. That achieves an aggregate new object which has automatic drill-down menu capability. By positioning the pointing cursor on one instance composing the new aggregate object, the hierarchical structure of the tree can be automatically displayed without requiring additional TCP/IP messages which would be necessary in the usual HTML pages. The drill-down capability results from the properties assigned to the different instances of the graphical *menu* object, which were instantiated under control of the Cloning Control Instructions (CCI) extracted from the property files or produced at run-time by the server. In addition to the drill-down capability, each instance of the menu graphical object receives the operation of invoking a new set of CCI instructions upon actuation by the user. This permits to cause the execution of a new cloning process and, finally the elaboration of a new graphical screen based on the objects or classes existing in the library. Therefore, a very limited set of objects can be used for producing a wide number of successive screens and the drilling-down menu permits to get a direct access to any location within the data structure. The successive refresh operations and intermediates HTML pages which were evoked in the prior art solutions can be avoided. A quick, comfortable and very effective access to the data base is thus provided, even remotely.

More particularly, each document which is opened by the plug-in container causes the creation of a background screen which is also derived from an object contained in the library of graphical objects embedded within said plug-in container. The background screen receives, on the foreground, instances of the graphical objects which are extracted from the library. The instances of the graphical objects are created during the generation of the screen, and receives data in accordance with cloning instructions which are defined by Cloning Control Instructions (CCI) which are extracted or derived from property files located on the server, or computed by the latter at run-time. Therefore, the background object and the foreground objects can be individually modified and allows effective access to the data structure even with a low speed modem attachment.

It appears that each graphical object of the library may be used for automatically generating and controlling, at run time, a wide variety of different screens, what facilitates the work for web designers who are no longer compelled to create, elaborate and maintain a great number of HTML pages which would have needed for realizing the business application. Only the set of CCI instructions needs to be defined. The association of the cloning process and a preexisting library of graphical object can even provide a very effective development tool for achieving quick and sophisticated business applications.

Since the preexisting browser of the client machine is used for handling the TCP/IP connections in cooperation with the plug-in container, no installation procedure of any additional program or software package appears is required. If necessary the corresponding plug-in can be directly downloaded during the first connection to the server. Any common computer can thus be used for the purpose of achieving an effective and user-friendly access to a remote database via the Internet network.

It should be noticed that, independently of the context of a web browser and any connection to the Internet connection, the invention provides a new navigation tool which is based on a locator allowing an easy way to explore the different pages of a data structure which can be displayed by the browser. Basically, the controllable graphic menu involves a drilling menu representing a hierarchical structure of pages or screens, a locator line providing the succession of levels which have lead to the current page which is being displayed, and means for causing the display of the drilling menu when the user points on one particular level of the locator and means for directly accessing the new page in accordance with the new position of the page upon selection by the user. More particularly, the invention provides an access to the data base where the messages which are exchanged between the client and the database comprises a coded representation of the tree and the data structure so that the data structure can still be displayed without the need of further transmission of pages. This navigation process presents the advantage of saving space on the screen since the user is provided with a complete access of the data structure while it is no longer necessary to display all the structure, but only the history line of the currently displayed page.

### Description of the drawings

An embodiment of the invention will now be described, by way of example only, with reference to the accompanying drawings, wherein:
Figure 1 illustrates the basic client server environment.
Figure 2 is an example of a structured set of HTML pages in the prior art solution.
Figure 3 is an illustrative example of the environment which is involved in a database business application.
Figure 4 and figure 5 respectively illustrate a generic combobox and a generic listbox.
Figure 6 illustrates the process of assembling of a *menu* object which is used for achieving an aggregate object having automatic drill-down menu capability.
Figure 7 is a flow chart illustrating, in Unified Modeling Language, the process which is involved during the logon and password checking procedure.
Figures 8 is an exemplary screen being displayed to the user during the logon and password checking procedure in the preferred embodiment of the invention.
Figure 9 shows the screen displayed to the user when the *observer.swf* movie waits for the receiving of the CCI instructions involving in the cloning process of the different *tower* objects.
Figure 10 is a flow chart which is represented in the Unified Modeling Language (ULM) format, and which illustrates the process of assembling, under control of the CCI instructions, the different *tower* which are assembled into the plug-in container in accordance with the user's profile.
Figure 11 illustrates the result of the process of figure 10 which is being displayed to a first user which is the Administrator having extended access rights to the database, and to the business functions involved in the access of that database.
Figure 12A illustrates the result which is being displayed to a second user having reduced access rights to the business functions of the database.
Figure 12B shows how to arrange the figures 13 and 14 for the purpose of assembling a comprehensive view of the drilling-menu generation process.
Figures 13 and 14 is a flow chart which represents, in the ULM format, the automatic generation of the drilling-down menu as represented in figure 6.
Figure 15 is a flow chart illustrating the process of assembling the different elements composing the *navigator.*
Figure 16 is a flow chart illustrating the process for assembling the different elements composing the *locator.*
Figure 17 illustrates the assembling of the first instance of the *Menu* item object composing the *navigator-locator* drilling menu.
Figure 18 illustrates the creation and assembling of five instances derived from the first instance of figure 17, for the purpose of achieving the first drill-down processing of the menu.
Figure 19 shows the reiteration of the cloning process being executed upon the actuation of the "initials" Menu instance.
Figure 20 illustrates the assembling within the plug-in container of the result of the cloning process which is executed in response to the actuation by the user of the *ADD instance of the drilling-down menu shown* in figure 19
Figure 21 illustrates the assembling within the plug-in container of the result of the cloning process which is carried out when the user selects a combobox of figure 20.
Figure 22 illustrates the assembling within the plug-in container of the result of the cloning process executed in response to the user actuating the *"save"* graphical object of figure 21.
Figure 23 illustrates the assembling within the plug-in container of the result of the cloning process executed in response to the user actuating the *"edit"* graphical object of figure 20.
Figure 24 illustrates the assembling within the plug-in container of the result of the cloning process which is executed in response to the actuation by the user of the *List graphical object shown* in figure 19.
Figure 25 is another example of the assembling of different instances composing the aggregate drilling menu object.
Figure 26 illustrates the assembling within the plug-in container of the result of the cloning process executed in response to the user actuating the *"Add"* graphical object of figure 25. The role of the locator is evidenced.
Figure 27 and 28 are illustrative views of the top menu assembling process when the user selects the "Project and time report" *Tower* object which is illustrated in figure 11.
Figure 29 illustrates the Content frame and Figure 30 shows the screen which is constructed during the waiting process of the CCI instructions generated by the server for the purpose of creating the first main menu item.

### Description of the preferred embodiment of the invention

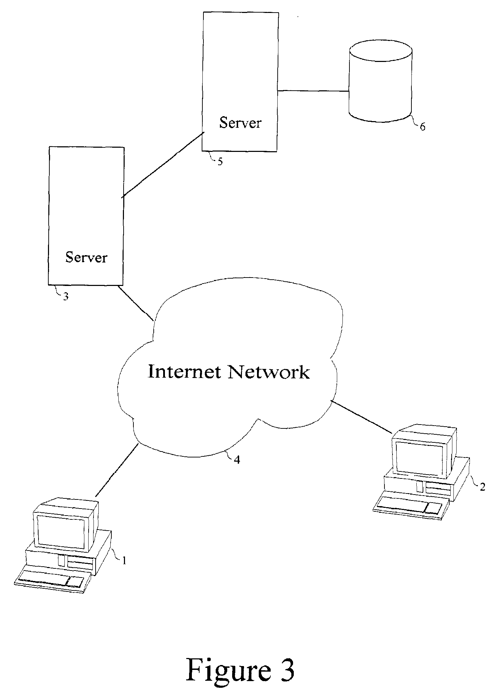

With respect to figure 3 there is shown a basic client-server environment which can take advantage of the present invention. Two clients 1 and 2 are attached to a Global Communication Network 4, such as an Internet or Intranet network. A server 3 is also connected to the network and serves as an intermediate layer or middle tier for interfacing with a server 5 having a direct access to the database 6, such as DB2, ORACLE, SQL etc.... The invention will be described in reference with a business application, for instance an Enterprise Resources Planning (ERP) application which can be used, for instance, for the purpose of real-time inventory or purchase procurement management.

In the preferred embodiment, each client 1 or 2 has a browser such as Internet Explorer 4 or Netscape 2 for instance, which is fitted with an additional plug-in package serving as a container for parsing data, i.e. opening documents and generating graphical animations on the screen and having fill-in forms capabilities. The browser is particularly used for handling the TCP/IP connections with the server. Particularly, as known by the skilled man, the browser transmits POST or GET requests to the server and receives the corresponding information via the TCP/IP message system, and opens it through the plug-in.

The process is based on the use of a library of graphical components or classes of objects for the purpose of creating clones of the objects which receive attributes and operations (or behavior) for the purpose of being assembled, at real time, within the plug-in container in accordance with the requirements of one particular business task. Each component of that library is a generic object which receives all the logic and mechanisms corresponding to a determined task. The behavior further includes the cloning possibility for the purpose of creating new instances with specific attributes and operations. The cloning of each generic object of the library is automatically achieved at real time, as will be explained below with many details, thanks to a set of Cloning Control Instructions (CCI). In one embodiment, those CCI instructions are directly derived from a set of property files which are physically loaded on the server. Alternatively, the cloning instructions can be produced, at real time, from a process which is run on the server and which can access one database. In the remaining part of the description it will be assumed that a set of property files will be used for producing the CCI instructions being used for controlling the cloning process of the different classes or objects of the library which are, eventually, assembled into the plug-in container. By creating and maintaining the sets of property files, the web designers are given an effective development tool for generating a business application, whatever complex and sophisticated it is. Generally speaking, the cloning instructions which are contained in the property files define the information which determine, for each class or object identified in the library, the number of instances to be instantiated and assembled within the plug-in container and the appropriate attributes and operations which are to be assigned for each clone, including, when appropriate, the data extracted from the database 6. The assembling within the plug-in container of the objects which are involved by a given task can be easily achieved. The behavior of each particular instance of a graphic object being assembled particularly comprises the capability of triggering a new property file (or alternately a new real-time computation of the CCI instructions) when the user actuates the corresponding object or instance which is displayed on the screen. A new cloning process is initiated which is controlled by a new set of CCI instructions and, therefore, which result in the assembling of new instances of objects from the library so that a new task and a new screen can be assembled and displayed. As previously, the CCI instructions define the number of instances to be created and displayed, with the attributes and properties ― including data - to be assigned to each instance for a final assembling within the document opened by the plug-in. The different instances cause the assembling of an appropriate graphical screen corresponding to the business task being desired, since each instance of the graphical objects is assigned the specific attributes and specific operations which corresponds to that task. A wide variety of different screens and tasks can thus be achieved even if the library only contains a limited number of objects. It can be possible to design screens and tasks for the purpose of adding a new supplier record, editing an existing supplier record etc... When the set of instances of the graphic components of the library has been created, with the assigned attributes, operations and data, the result of the cloning process is transmitted via the TCP/IP protocol managed by the browser to the plug-in for the purpose of assembling the result in the client's machine.

The description below will provide examples of the great variety of objects which can be assembled in accordance with the new cloning mechanism. Such objects includes, without limitation, a generic button, a generic combobox, a generic listbox, a generic entrybox and, additionally, a generic drilling menu or navigation tool are included into the library.

A first object or graphical component consists of a generic *button* object comprising the logic and mechanism for producing clones or instances which are to be assembled within the plug-in container, with attributes and behavior, including, when appropriate, data extracted from the data base 6. The attributes of the *button* graphical object may particularly include the name of the instance, the text to be displayed on the screen, the size, the location and the color on the screen etc... During the run-time cloning process, each instance of the generic button object receives operations which includes, among others, the loading of a new document and the triggering of one associated property file existing in the server, as it will be explained below.

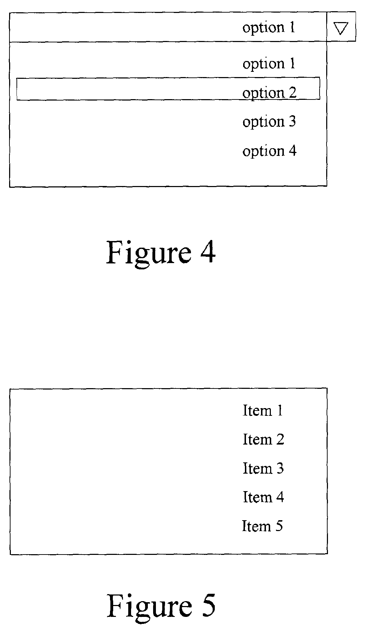

In addition to the generic button graphic object, the library may include a *combobox* generic component which is an element causing the opening of a list of options for the purpose of selecting one particular option within the list. Such a combobox is shown in figure 4. The generic combobox includes the logic and mechanism needed for producing clones or instances having their own logic for achieving the assembling within the plug-in container. Each instance of the *combobox* further receives, under control of CCI instructions, the attributes, operations and data extracted from the data base for the purpose of assembling the graphical screen. Similarly than for the *button* class, the attributes of the combobox instances include the name, the size, the data displayed in the options fields etc... Among the operations, there are included the necessary logic for the appropriate graphical display on the screen, and that for applying for applying the option being selected, the calling of a new document in the plug-in recognized, and the triggering of one associated property file which is loaded on the server, for the purpose of executing new cloning operations as will be explained hereinafter.

Figure 5 shows a *listbox* which can also take advantage of the cloning mechanism which is executed under the control of the CCI instructions. The listbox is a graphical component which is generally used for opening a box and listing a set of different items or data which is extracted from the database and presented in a list. As for the combobox, the listbox generic component has all the logic and mechanism which is necessary for producing one corresponding object on the screen when it is assembled within the plug-in container. It also receives the corresponding attributes, behavior and operations. The attributes define the name, the position, the size, and also the operations required for extracting the appropriate data from the data base and for introducing them into the generic container. The particular operations which are assigned to one listbox further includes the calling of a new document recognized in the plug-in container format, and also the triggering or invoking of one associated property file.

In addition to the combobox and listbox, the library of graphical objects may advantageously include an entrybox which has attributes (the name of the considered instance, the text to be displayed) and operations (validation and checking procedure of the data being entered). The operations further includes the triggering or invoking of an new property file on the server upon selection of the user for the purpose of executing a new set of cloning operations.

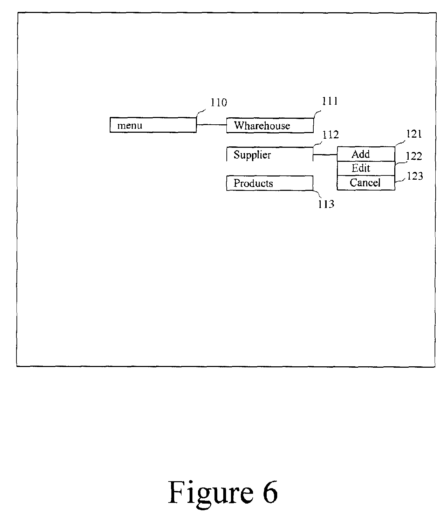

Among the particular graphic objects which are included into the library, there is a specific drilling-menu component - a so-called *Menu_item* object - which is used for assembling and providing an aggregate drilling menu, such as shown in figure 6. The drilling-down menu - which creation will be particularly described below with many details - can directly take advantage from the cloning process described above. It achieves the assembling, within the plug-in container, of an aggregate menu which is used for providing the user with a direct access to all the data structure of the web site without requesting, once created and assembled, additional TCP/IP connections, and the transmission of a great number of HTML pages which the usual HTML design way would entail.

The specific elementary *Menu_item* object which is used within the library is a container having all the logic and mechanism for creating hierarchical and drill-down menu in accordance with the contents of the property files. The attributes and operations include cloning capability for producing different clones or instances, similarly to the above mentioned combobox or listbox , and also the capability to delegate to the clones or children the cloning capability. The successive execution of the cloning process successively produces a set of instances of the same *Menu_item* object which, when assembled into the plug-in container, carries out the drilling menu. As for the combobox or listbox, the cloning process of the different instances is controlled in accordance with the contents of the property files and allows the generation of an automatic drill-down menu without requiring and additional TCP/IP connections once the different instances of the object have been assembled.

More particularly, the *Menu_item* object receives attributes and operations for cloning into different instances, and each clone receives, similarly, its own attribute (name) and the same cloning capability. When the user clicks on one clone of the *Menu_item* object, the active object which was launched by the browser executes the corresponding property file on the server. This is achieved, again, by means of the transmission through the network of an instruction which is received by the application in the server. That instruction is decoded and causes the execution of the cloning process which is defined by the relevant property file. The property file causes the *Menu_item* object to produce *n* clones in accordance with the number of business tasks considered. Each clone receives its attributes and operations in accordance with the contents of the property files and, further, produces additional clones. Figure 6 illustrates the result of the cloning process of the *Menu_item* object: an unique instance 110 is firstly produced which receives the name "top menu", and that instance 110 produces three clones, respectively instance 111, 112 and 113 which receives the name "Warehouse" (for giving access to the business tasks relating to the *Warehouse* records ), "Supplier" (for giving access to the business tasks relating to the Supplier records) and "Products" (for the business tasks relating to the Products records). The property file causes the "Supplier" instance 112 to produce two additional clones: an instance 121 (LIST) of the *menu* object and an instance 122 (ADD) of the *menu object.* As explained above, all the instances of the *Menu_item* object receives, in addition to the attributes, the operation for executing the corresponding business task, and particularly the triggering of the relevant property file for initiating a new cloning process corresponding to a new task. Among the tasks which are assigned to each instance, there is given the direct triggering of the property file which is associated to the instance being pointed by the cursor, so that a new cloning process is being executed and the display continuously refreshes for the purpose of developing the hierarchical tree. The user can thus have a direct access to any level of the data structure.

The result of the cloning process is then received by the browser and assembled in the plug-in container and thus displayed to the user. That object appears with an automatic drill down capability. Indeed, among the operations assigned to the instances of the *Menu_item* component or object, is the capability, for one instance, to display the children when the user is pointing on one instance. The process of assembling the different instances of the drilling-menu component, automatically produces the generation of the drilling menu and this is immediately received by the client since only a few kilobytes message is to be transmitted. This results in a substantial reduction of time and, correspondingly, a substantial enhancement of the comfort of the user who can really navigate through the data structure, even with a slow modem attachment to the network. Contrary to the usual HTML design, there is no necessary to receive a intermediate HTML pages for navigating within the data base. An complete access to the data structure is directly provided by means of the automatic cloning process of the different instances of the drilling-menu object.

Although the specific drilling-menu object appears to significantly enhance the cloning mechanism in the perspective of accessing a data base in a client-server environment, it should be noticed that the drilling menu graphical object can be used irrespectively of that particular client-server environment, and may serve as an effective navigation tool even for local software applications handling a complex access to a data structure. Indeed, the drilling-menu which is described above, and the enhanced navigation-locator which will be particularly described below, allows to drastically save space on the screen since the user is constantly given an immediate access to the complete data structure, without the necessity of displaying all the different levels of the structure. Further, the access is immediate since only one selection is appropriate for jumping to the desired page.

In the client-server environment, it is clear that the automatic drilling menu substantially enhances the comfort of use of the application since the menu receives the possibility to drill-down without any additional solicitations of the TCP/IP message system. The same TCP/IP message is used for transporting the complete result of the cloning process, what allows the knowledge of the complete hierarchy of the data structure.

The architecture of graphical objects which was described above, is to be programmed and compiled by means of an appropriate development tool or plug-in. As explained above, in the best mode of operation, the development tool is embodied under the form of a plug-in code or container which is associated with the preexisting browser. The particular interaction between the plug-in and the web browser is well known to the skilled man and will not be further explained with details. It is however sufficient to recall that the plug-in program has its own format and recognizes that format in the documents received from the server and can then open any document having that format and which embodies the application based on the graphical objects architecture. Practically, any development tool can be used for embodying the graphical object architecture, particularly but not exclusively those achieving vector based web sites and receiving variables from external files. An illustrative example of a plug-in or container which can be used for programming the objects is available under the name Flash ™ and can be found from Macromedia ™ Inc.

The objects which are described above are only examples of graphical components which may be controlled by cloning instructions which are loaded into the property files. According to the particular requirements of the application which is considered, it will be possible to create additional and specific objects which can take advantage of the automatic cloning mechanism which will now be described with more details.

For the sake of demonstrating the effectiveness of the cloning mechanism applied to objects transmitted by a server and opened in plug-in container associated to the browser of a client machine, they will be described now, with many details, a preferred embodiment allowing an access to a sophisticated data base by a simple computer having only a pre-existing web browser. Additional advantages of the enhanced navigation tool, the so-called locator-navigator, will be evidenced.

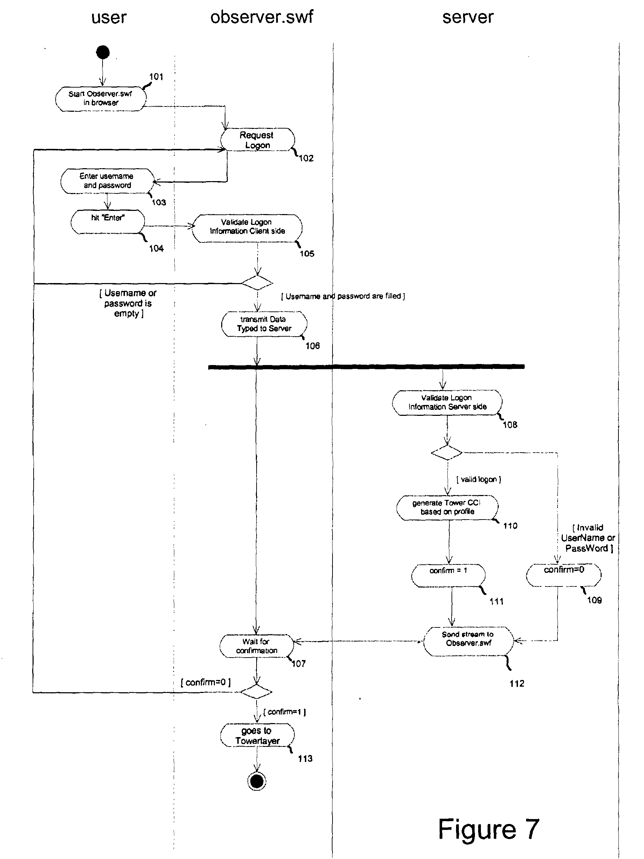

Figure 7 illustrates the process for assembling the different screens which are relevant in the first part or movie of a business application. Figure 7 is particularly elaborated with reference to the principles of modeling of the *Unified Modeling Language* standard, as they are taught, for instance, in the reference book "Unified Modeling Language User Guide" *by Grady Booch".*

The process is initiated with the loading of the existing web browser and the request by the user of a Uniform Resources Locator (URL). Although the cloning mechanism is well adapted for accessing remote resources in a server-client environment, it should be noticed that the latter can even be used in a local configuration, when the browser issues an URL for requesting a local HTML page existing on the local file system. That first HTML page which will be opened by the browser will remain the first and unique HTML page which is received from the server. That first HTML page comprises the appropriate HTML tags associated with the corresponding information which is required for launching the business application and more precisely the document which will be recognized by the plug-in contained and opened by the latter.

The business application is then launched, what results in the launching of a first document in a step 101 - a so-called *Observer.swf* document - which embeds the library of the graphical objects forming the basis for assembling all the graphical screens involved in the application, such as the required buttons, combox, listbox etc... , and the specific enhanced navigation tool, the navigator-locator. In addition, the *Observer.swf* document causes the assembling of a first set of objects - at least an entrybox - for the purpose of starting a logon and password checking procedure. In the description, it will be assumed that different kinds of users may access to the business application: for example an Administrator which has extended access rights, and the common user with only limited access rights.

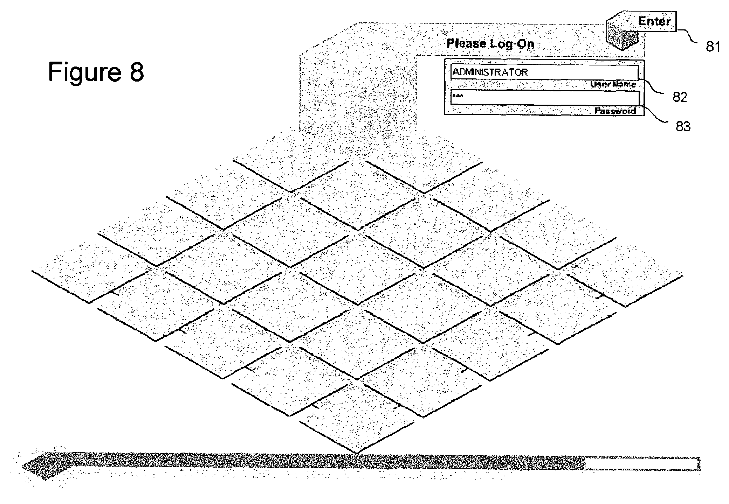

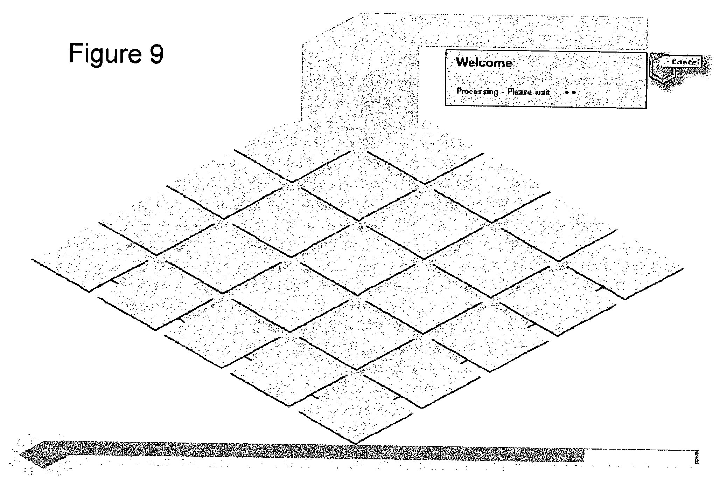

The logon and password checking procedure starts with step 102 which is a *"request logon"* step corresponding to the assembling of one appropriate screen which is such as that being illustrated in figure 8. A first instance 81 corresponding to a graphical button object is being assembled, as well as two entry boxes 82 and 83 for receiving the userid and the password data of the user. Although this is not absolutely necessary in that stage, the *Enter* button 83 which is assembled in the screen of figure 8 can take advantage of the cloning mechanism under control of the CCI instructions provided by the server, for the purpose of managing different profiles and languages. When the user actuates the "Enter" key (step 104) after having entered his userid and password as illustrated in figure 8 (step 103), the *observer.swf* starts a validation procedure in step 105 for checking whether acceptable characters are actually entered by the user. If case of failure of the validation of the characters, the process goes back to step 102. On the contrary, the userid and the password are transmitted to the server in step 106, what is achieved by means of appropriate POST requests handled by the communication layer of the pre-existing browser. The processing is accompanied by the assembling of a second screen, as shown in figure 9, for providing a visual feedback to the user of the transmission of the userid and password.

Two processes are being executed, simultaneously in the *observer.*swf state machine and in the server.

On one side, the *observer.swf* state machine waits for a confirmation (step 107) received from the server of the transmission of the password and the userid. A screen such as that illustrated in figure 9 is being displayed to the user on the client machine.

On the other side, the server is initiating a validation procedure during a step 108 for checking the data entered and determining whether the userid corresponds to an effective one and for validating the password which was entered by the user or the administrator. Appropriate access to a database associated to the server can be involved for that purpose. Such logon and password validation procedure are well known to the skilled man and will not be developed further on. If the userid and the password are not recognized by the server as being an valid one, the test fails, the process proceeds to step 109 where a CONFIRM variable is being reset prior to proceeding with step 112.

In the case of validation of the userid and the password, the process which is executed by the server goes to step 110 where a string of Cloning Control Instructions is being elaborated. In the best mode, a number of so-called *towers* objects (representing different *business tasks* involved in the business application) are used for materializing the different accesses to the data structure, either by the Administrator or by the user. The *towers* are specific objects contained within the library of objects which receive attributes and properties. Among those is the property of launching a particular business task upon selection of the object - on instance - by the user. If one user clicks on a tower which is displayed, the process will proceed with the construction of a new frame - a so-called *Content* frame or layer - for the purpose of getting an access to the different data mining of the relevant business application, as explained below with details. As for any object within the library, every *tower* instance which is assembled by the *observer.swf* document is controlled by a CCI which defines the different attributes (e.g. *instance name* of each clone or instance, but also the *name* to be displayed on the screen) as well as the properties assigned to the object, once instantiated, and among which, the property of triggering or invoking a new property file in response to the selection of the instance by the user. The *content* layer will be described with more details hereinafter. Although the logics and mechanisms involved by the *tower object* class is embedded into the *observer.swf* document, the number of instances of that object to create, the attributes and the properties, is defined by the CCI string being produced by the process of step 110 being run into the server.

In one particular embodiment, the CCI string can be extracted from an appropriate *property file* which is existing in the file system of the server while, in another embodiment, the CCI stream is directly produced by the server, at run time, thanks to an existing process in accordance with variables and parameters which are loaded into a database.

Further to step 110, the CCI string is completed by a confirmation variable (CONFIRM) which is being set to 1 in order to acknowledge the correct building of the CCI string, and the process being run into the server proceeds then to step 112 which corresponds to the transmission of the CCI string.

The *observer.swf* process which is executed within the client machine, and run within the plug-in container, receives the CCI string. In accordance with the value carried by the CONFIRM variable, the confirmation step 107 returns a True or False condition. If the CONFIRM variable is set to zero (what occurs either when the logon procedure fails in step 108 or when an error occurs during the elaboration of the CCI string in step 110), the process executed by the *observer.swf* movie goes back to step 102 while, in the reverse case, the process goes to the next movie, a so-called *Towerlayer, in step 113.*

In step 113 the logon procedure is being completed and the process of the *observer.swf* document can launch the *Towerlayer* which results in the assembling of the different *tower instances.*

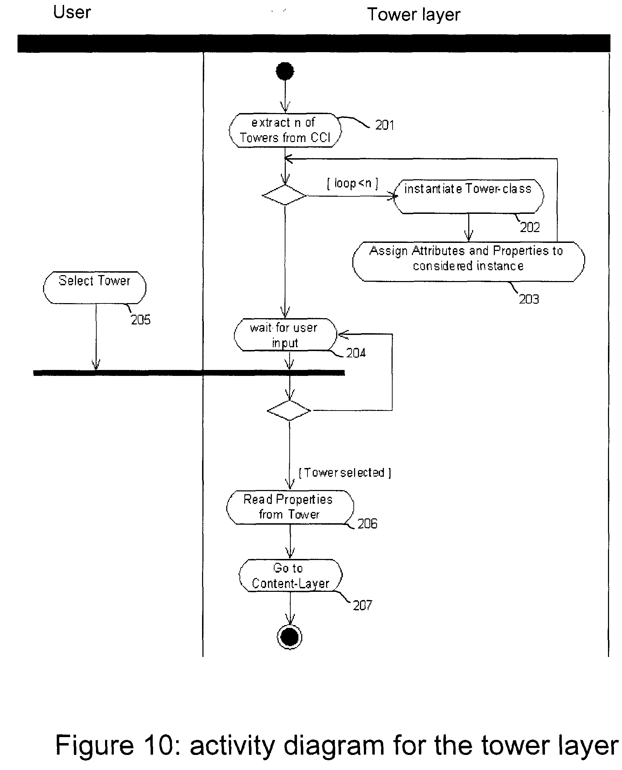

Figure 10 shows the activity diagram of the *towerlayer* of the *observer.swf process.* It is performed in the client machine upon the reception of the CCI control instructions from the server during the logon validation procedure depicted in figure 7.

In step 201, the *Observer*.swf process uses the contents of the CCI instructions for determining the number n of *towers* instances which are to be elaborated. A loop is then initiated for successively creating the different instances. To achieve this, the *Tower* class which is embedded in the Observer.swf document is cloned and the clone is instantiated in step 202. Then the appropriate attributes and properties which are defined by the CCI string are assigned to the considered clone in step 203. Then the process loops back for the purpose of a new instantiation, when appropriate.

When all the items or graphic *towers* have been cloned and elaborated, the process proceeds to a waiting step 204 where a new input from the user is awaited.

If the user selects one *tower* instance, what is represented on the figure by step 205, the properties which correspond to the clone are read in step 206 and then the *content layer* is being launched in step 207. As mentioned above, the launching of the *content layer* is an operation which is part of the Tower class since the considered clone has received all the attributes and properties of the tower class. The process then completes.

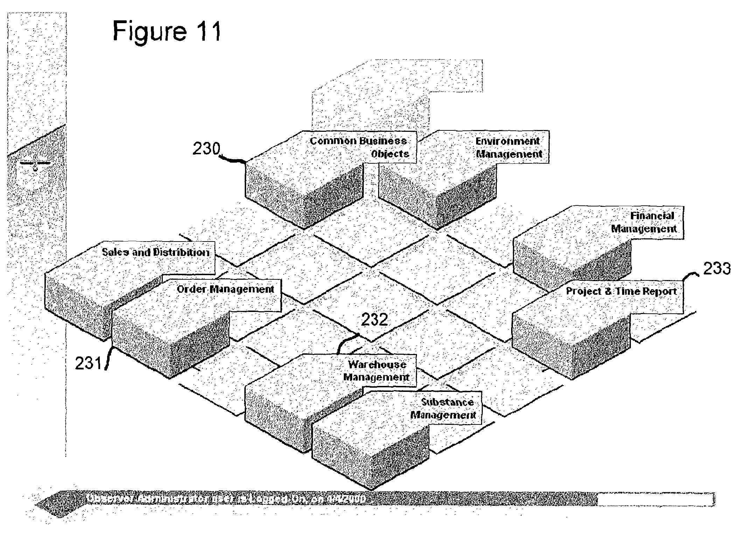

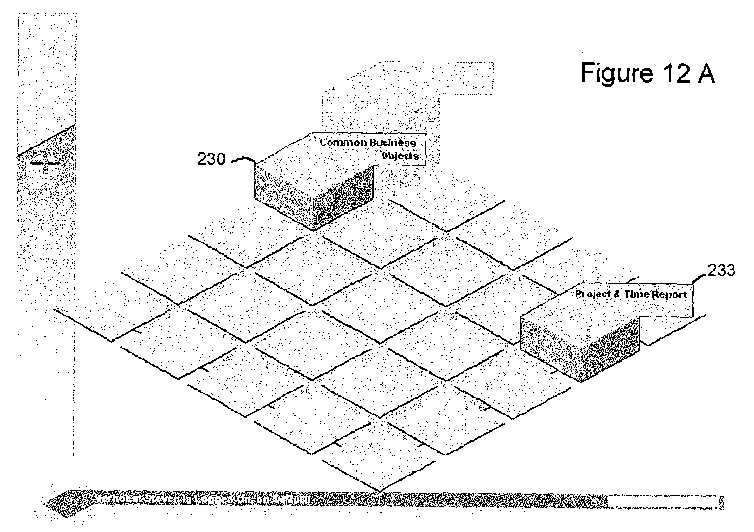

Figure 11 and 12A respectively illustrates the result of the cloning process when applied on the *Tower class or object,* when either the Administrator or the user accesses the business application. Each *Tower* object which is cloned corresponds to one particular task (hereinafter referred to a business task) which is relevant to a particular access to the database and the number of individual clones is defined by the CCI string in accordance with the access rights assumed to be assigned to the user. As illustrated in figure 11, the Administrator receives extended access rights, what is materialized by a cloning process which assembles numerous *tower* instances, under the control of the CCI instructions. An illustrative example is shown in figure 11 which shows a so-called *"Common Business Object" tower 230* for accessing very general information relating to one company, with the description of the premises, the references to the staff etc... A second instance, a so-called *"Order management' tower* 231, corresponds to the handling of the different orders and commands within the company. A third task - *"Warehouse Management"* (reference 232) ― is used for accessing the information relating to the different Warehouses of one company while a *"Project and Time Report"* object 233 deal with the project management... The cloning process provides a great flexibility since the same object - a tower object - can be used for creating different instances relevant to different situations and environments. The *observer.swf* file appears to have a reduced size, what facilitates the transmission through the Internet or Intranet network. Indeed, a limited amount of data - essentially the *observer.swf* file, and subsequent files and the CCI strings, need to be exchanged.

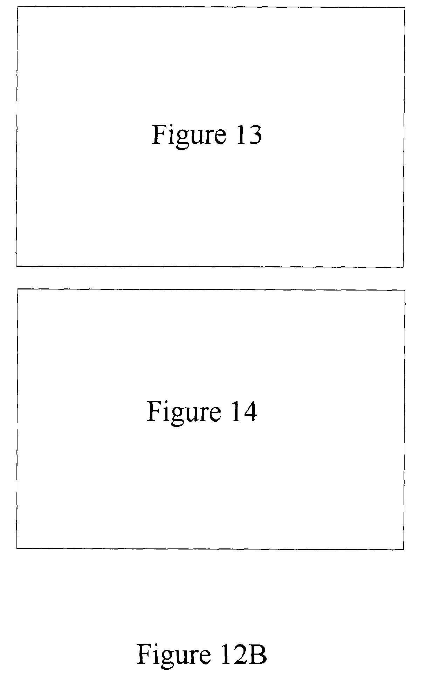

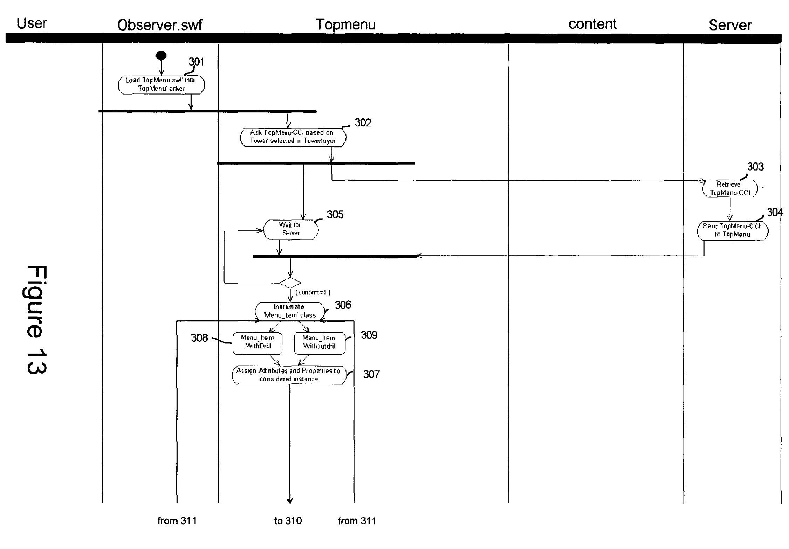

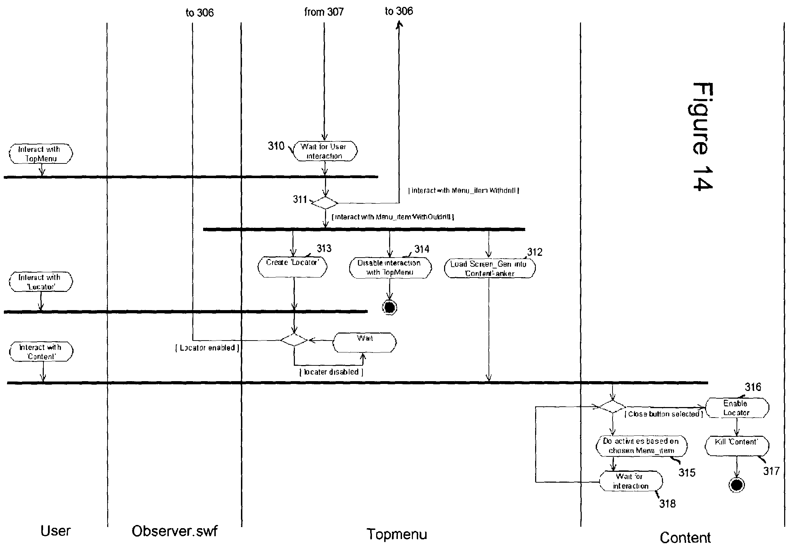

For the sake of clarity, it will be now described how the process can be used for generating sophisticated objects which are useful for the purpose of the business application. The creation of the enhanced navigation tool - so-called navigator-locator - will now be specially considered with reference with the flow charts of figures 13 and 14 which should be arranged in accordance with the drawing of figure 12B.

The process for assembling the navigation tool starts with step 301 of figure 13 which consists in the loading by the observer.swf document of a new document which is named the *Topmenu.swf.* This is achieved by using an appropriate *TopMenu* anker, which is a special class into which an external class can be loaded. The techniques of creating and handling ankers is well known and will not be further elaborated on. It should be also noticed that the loading of a second *Topmenu* document is a simple choice of realization. Alternatively, an unique document which could be contemplated. Basically, the practical way of calling the new document is dependent on the particular plug-in program or development tool which is being used.

From the instant the *Topmenu* is being loaded, the user interacts with the latter.

In step 302, the process which is executed into the client machine and which corresponds to *Topmenu.swf* document is requesting to the server the CCI instructions required for the elaboration of that *Topmenu.*

In step 303, the server is retrieving the *Topmenu* Cloning Control Instructions. As explained for the *Tower* CCI, the *Topmenu* CCI can be extracted from a set of property files (such as text files) or, also, can be generated at run time from data and variables extracted from a database. In any case, it should be noticed that the string of CCI only represents a few kilobyte of data transmission between the server and the client, what ensures a very quick transmission and response from the server. That provides a substantial advantage with respect to the known prior art HTML technique.

In step 304, the server is sending the *Topmenu* CCI (finalized with the last item Confirm=1) to the *Topmenu.swf* document which is waiting for it in step 305.

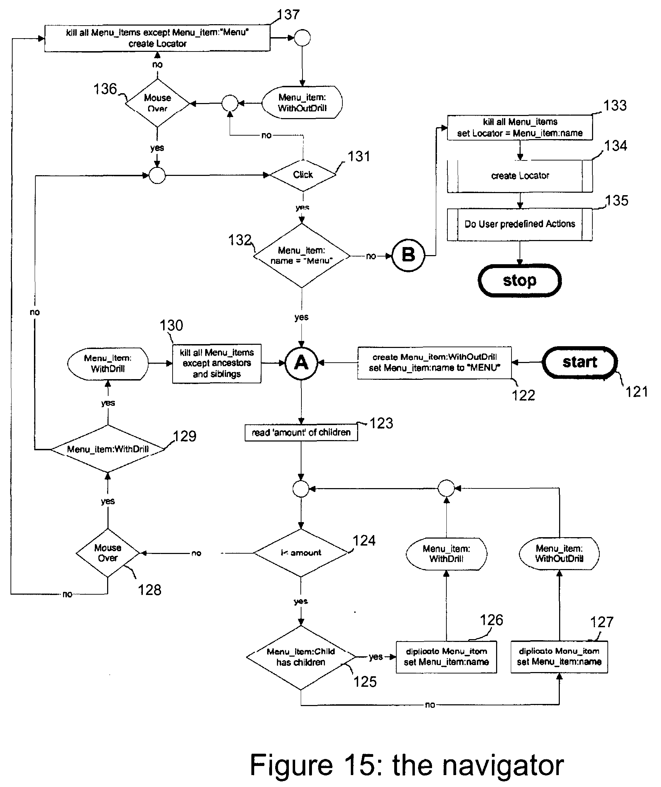

In step 306 a cloning process is being executed for creating the complex drill-down menu. That creation will be more particularly described in reference with figure 15. Basically, each instantiation of the Menu_item classe produces a clone which has tow different states of the *Topmenu* state machine, as represented by block 308 (Menu_item Withdrill) and block 309 (Menu_item Withoutdrill). Indeed, while the number of clones or instances may be very diverse in accordance with the Cloning Control Instructions, however each instance has only two different states: without or with the drill-capability. Those two states are respectively represented by blocks 308 and 309. In step 307 of the cloning process of the Menu_item class, each state/instance receives specific attributes and properties in accordance with the Cloning Control Instructions necessary for further activities.

The *Topmenu* process waits for an interaction with the user, in step 310. In one embodiment, the user interacts with one instance of the *Menu_Item* object by a selection of the latter while, in another embodiment, it will be sufficient to put the cursor over a specified area of the screen.

In step 311, the *Topmenu.swf* document causes the read of the properties of the *Menu_item* instance which was selected, or with which the user interacted. As explained, the setting of the properties of the *Menu_item* instances were done during the step 310, in accordance with the CCI provided in step 304.

Assuming that the user interacts with one instance of the *Menu_Item* class having Withdrill, the process goes back to the step 306 for the purpose of a new cloning process of the drilling menu. Indeed, the new cloning process which will be particularly described in reference with figure 15.

Assuming that the user interacts with an instance of the *Menu_Item* class which is WITHOUTDRILL, in that case, the process goes to steps 312, 313 and 314.

Step 312, step 313 and step 314 are simultaneously launched after step 311, when the user interacts with a *Menu_item:WithOutD*rill, and if the considered item is not the first one.

In step 314 ("Disable interaction with Topmenu"), the topmenu.swf causes the locking of the locator.

The launching of the business task is performed by step 312, while the creation of the locator is made in step 313. Those two process will be explained with more details in reference with figure 15. A new swf document is then loaded within the Observer.swf document, which is the contentscreen.swf document, with which the user will interact as shown in the figure 14 by steps 315 *("do activities based on chosen Menu_item"),* step 316 *("enable locator"),* step 317 *("kill content")* and step 318 *("wait for interaction")* represented in figure 14. It should be noticed that, as for the observer.swf, the contentscreen.swf contains a set of classes of graphical objects which are appropriate for the considered business tasks. for instance, a contentscreen.swf may include a set of graphical objects such as a combobox, a listbox, an entrybox etc...,

It should be noticed that, practically, since the document only includes libraries of graphical objects which are needed for the different instanciations, the corresponding documents have a limited size. For a business application, a typical size of the *Observer.swf document is about 100 Kbytes,* while the *Topmenu.swf* document is about 30 Kbytes and the *ContentScreen.swf* document is about 10 Kbytes. Additionaly, CCI strings of a few kilobytes are being transferred from the server to the client, what ensures a very low time response.

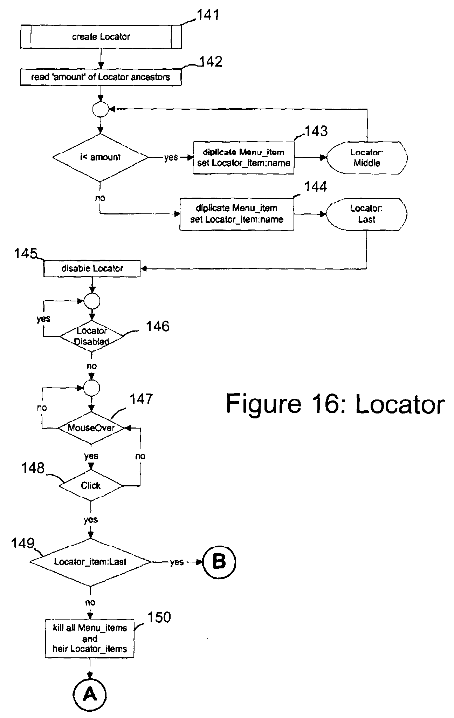

Figure 15 and Figure 16 now respectively detail the cloning mechanism for the production of the navigator and locator.

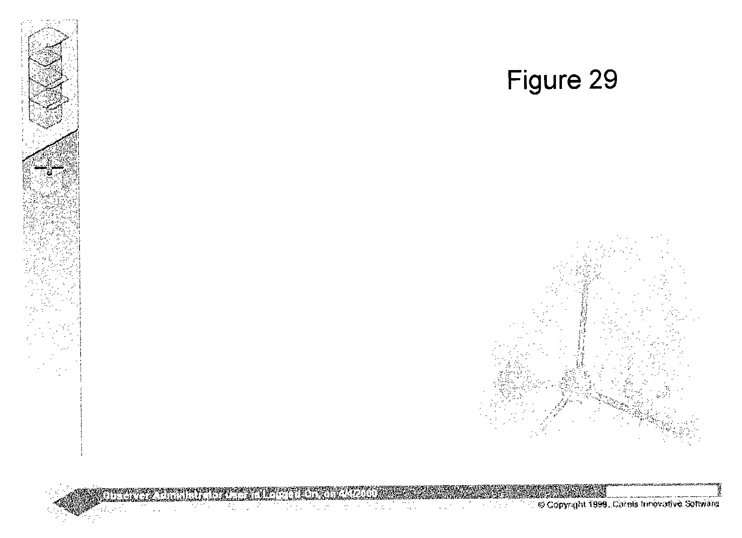

As mentioned above, each *Tower* object or instance has attributes and properties for launching the corresponding business application upon the selection by the user of the instance of the object. If the user clicks on one instance of the *Tower* object, the process goes to the construction of a new frame - the *Content* frame represented in figure 29 - for getting access to the data mining function of the business application. More specifically, the *Content* frame is an object which is used for any *tower* or business class and includes one element - *the Topmenu* which is part of the frame. The *Content* frame includes in the top left an anker to a new document which is a so-called *Topmenu.swf* document. The latter is not invisible but it causes the browser of the client machine starts the loading of the *topmenu.swf* document. Practically, this takes advantage of the capability of the plug-in container which is used to load successive document so that only small entities (comprising reduced size libraries of objects) are being used in accordance with the wish of the user and the scenario of the business application. Typical size for the *Topmenu.swf* document is 24 kbytes. It is received very quickly on most machines, even with low speed modem attachment and opened by the plug-in container.

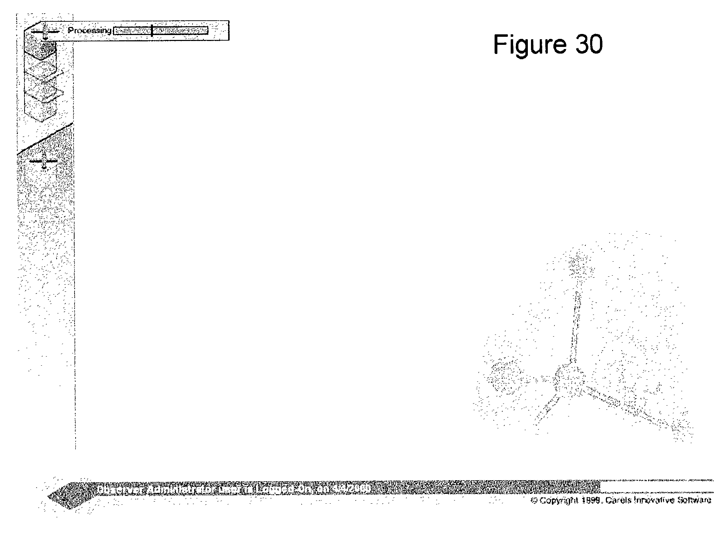

When the *Topmenu* swf document is loaded, the screen takes the form which is illustrated in figure 30 and a new a second CCI stream is requested for the purpose of controlling a new cloning process. It should be noticed that, as previously, the communication of the CCI stream is achieved by means of appropriate POST request which are issued by the browser.

The CCI instructions are generated by the server and causes the assembling of a drill-down menu which will be superimposed on the *Content* frame of figure 29, and which will have, on the foreground, a drill-down menu for accessing the data mining relative to the business task being considered. A typical example of a CCI stream is shown below. It corresponds to the elaboration of a drill-down menu for the "Project and Time Report" business task initiated when the user selects instance 233 of figures 11 and 12.
&Menu_01_02=0
&Menu_01_02_C=Current
&Menu_01_02_S=TimeSheet
&Menu_01_02_SPath=HR
&Menu_01_02_F=Yes
&Menu_01_01=0
&Menu_01_01_C=List
&Menu_01_01_S=TimeSheet
&Menu_01_01_SPath=HR
&Menu_01_01_ F=Yes
&Menu_02_02=0
&Menu_02_02_C=Project resp.
&Menu_02_02_F=yes
&Menu_02_02_L=Project responsible
&Menu_02_01=0
&Menu_02_01_C=BU resp.
&Menu_02_01_F=yes
&Menu_02_01_L=BU responsible
&Menu_02=2
&Menu_02_C=Report Gen.
&Menu_02_A=Report
&Menu_02_S=report
&Menu_02_SPath=HR
&Menu_02_L=This is for BU and Project responsibles only
&Menu_01=2
&Menu_01_C=Timesheet
&Menu=2
&men_item=Proj. and Time
&confirm=1
&end=

That string defines the different instances to be created from the unique *Menu_item* object or class which is contained within the library of object. Each instance receive an instance name, a name to be displayed, and relevant information relevant to the hierarchy of the considered drill-down menu. By convention the *"Menu_02_02"* corresponds to the second child of the second branch, with respect to the root etc... The CCI stream defines the different properties to the different instances or items.

By convention, the _*C* sign defines the content property which is assigned to one instance, and the _A defines the action property, ie which action on the server is going to be triggerred, such as a database access for instance.

It should be said that the format of the CCI in the preferred embodiment is mapped onto the used technology, but can be created in an other format for example in XML.

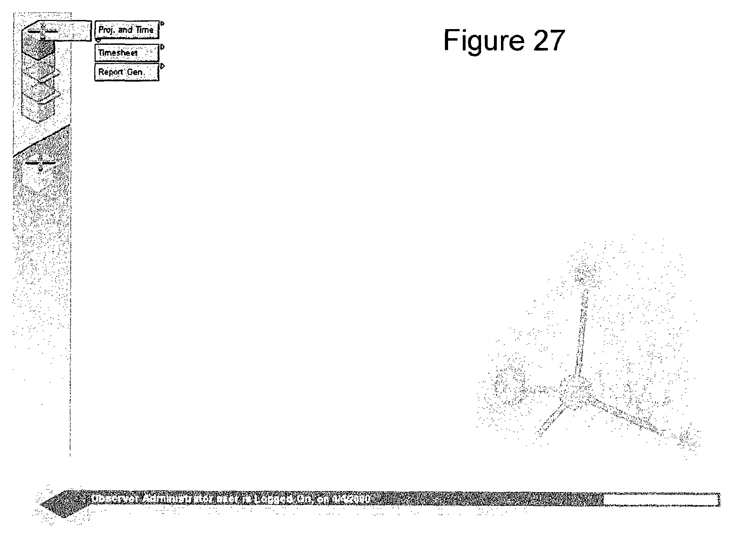

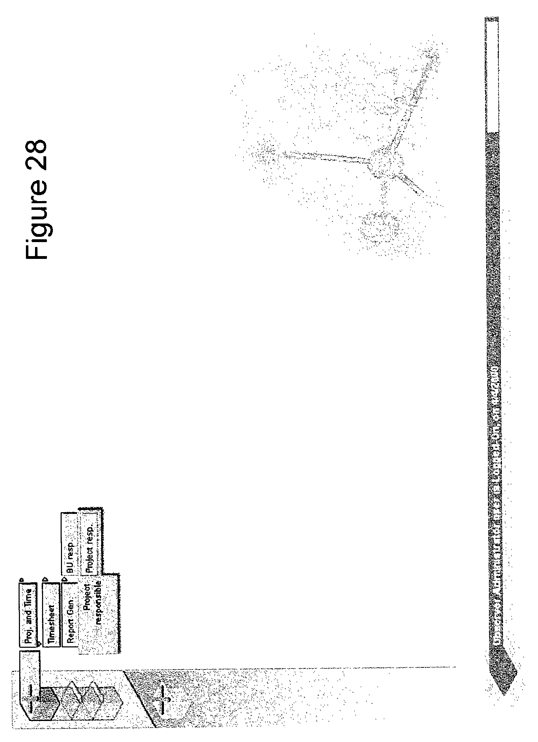

When the stream of Cloning Control Instructions is received from the server, and encapsulated within the *Topmenu.swf* document, the elaboration of the drilling menu is achieved. Such a drilling menu corresponding to the "Project and Time report" business task is illustrated in figures 27 and 28.

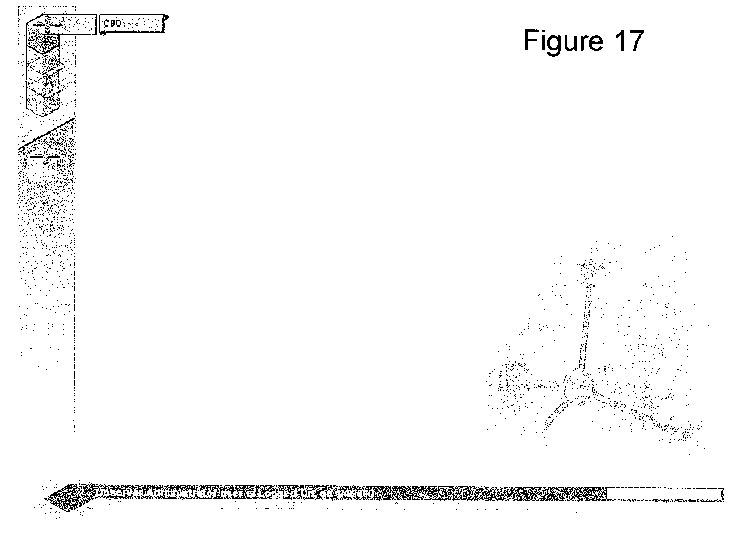

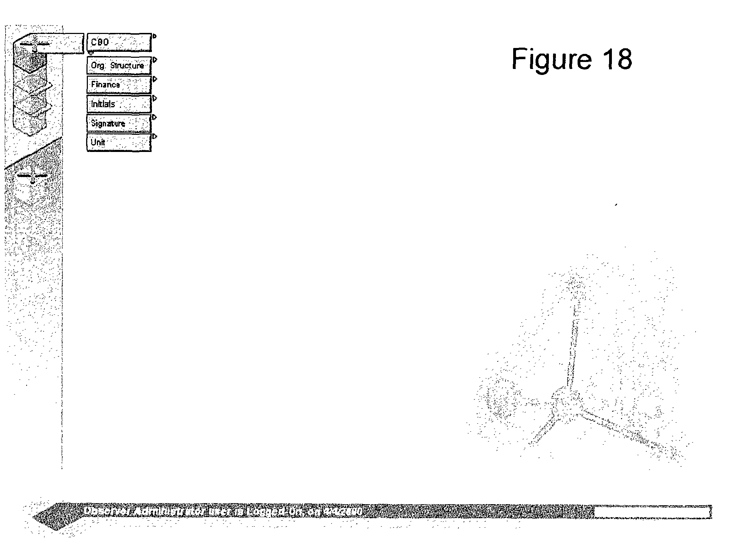

The remaining part of the description will now particularly describe the elaboration of the drilling-menu for the *"Common Business Object" Tower.* As for the *"Project and Time report" task,* the CCI instructions are used for creating the drilling menu corresponding to the CBO business application. The development of the drilling menu is successively illustrated in the figures 17, 18 and 19.

With respect to figure 15 there is shown the process of elaboration of the drilling menu.

The process starts in step 121.

Then, in step 122, the process creates a first instance of the *Menu_item object* which is called the topmenu, ie represents the higher level of the hierarchical structure of the drilling menu. That instance receives attributes and properties, and particularly a "Withoutdrill" attribute and an instance name which is *"Menu"* (it is not displayed to the user). The operations assigned to that instance consists in, practically, the calling of the CCI instructions provided by the server, and reading the *Menu_C string* for returning the name to be displayed in that topmenu instance. The first and top item of the drill down menu is thus created and has received a name.

In step 123,the amount of children relevant to the topmenu items is being determined, what is achieved by reading the "&Menu=2" of the CCI string generated by the server.

The process then proceeds with a loop comprising steps 124, 125, 126 and 127 which consists in the successive elaboration of each instance forming a child of the topmenu item. The cloning capabilities and mechanisms are part of the *Topmenu.swf* document so that they are only transmitted once from the server to the client and form part of the properties available in the *Menu_item* class. The loop of step 124 operates as follows: for each child, there checked (step 125) whether the latter has also children. In that case, the process goes to steps 126 which consists of a duplication of the *Menu_item* object with the attribute "Withdrill" (since the considered child has also children). Conversely, the process proceeds to step 127 which is a duplication of the *Menu_item* class with the attribute "WithoutDrill".

It therefore appears that the drilling menu can be based on the same *Menu_item* object or class which can be used for multiple duplications and cloning processes.

The steps 124-127 therefore causes the generation of the first level of the drill-down. The first branch is created and waits for a further action. This action is determined by the user controlling the mouse, and particularly whether the mouse covers one particular instance, as tested in step 128.

If the test of step 128 returns a yes, then a further test is performed in step 129 for the purpose of determining whether the considered instance (on which the mouse is located) has "WithDrill" attribute.

If this is true, then the process goes to step 130 where all the instances of the *Menu_item* are killed, excepted the ancestors and siblings of the considered *Menu_item* instance. The process can then return to the step 123 for the purpose of creating a new branch with the children of the selected item.

If the test of step 129 returns a False condition, then the process proceeds with step 131 which is a test for determining the occurrence of a selection of the considered item or instance of the *Menu_item* class.

If the user has selected the considered instance , then the process proceeds with step 132. Step 132 is a test for determining whether that instance is the higher level instance of the *Menu_item class* (ie the *Topmenu* instance), in which case the process goes back to step 123 for the purpose of recreating the first branch. In the reverse case, the process proceeds to step 133 where all the instances of the *Menu_item* class are killed , except the first one, which is the *Topmenu* instance. Additionaly, in step 134, the locator is being set to the name of the instance which has been selected and, in step 135, the business task which is associated to the considered *Menu_item* is being executed. The process is stopped when the business task is being executed.

If the test of step 131 has returned a "No" condition, then the process proceeds with step 136 where the position of the mouse is checked again in order to determine whether it is still over the item which was considered in step 128.

If the test of step 136 returns a "yes" condition, then the process proceeds with step 131 again and, conversely, the process goes to step 137 where all the instances of the *Menu_item object* are killed, excepted the first one, which is the *Topmenu* instance. The Locator is then being created in accordance with the flow chart of figure 16.

Figure 16 illustrates the process for creating and maintaining the locator which is an element providing a substantial advantage since it provides continuous feedback on the accurate position of the user within the data mining structure. As mentioned above, the locator, when used in conjunction with the drilling menu (the navigator) provides a very effective navigation tool: the navigator-locator which saves space and allows an effective access to a complex data structure. It should even be noticed that the navigator-locator can be used irrespective of any client-server application, and can be embodied in a local application running in a stand-alone computer.
The process for creating the locator starts on step 141.

On step 142, a read operation of the CCI is being executed in order to determine the number of ancestors.

A loop is then initiated for the purpose of the creation of the "Locator-Items". More particularly step 143 corresponds to the creation of the middle "Locator-items" where the loop ends via Step 144 where the last "Locator-item" is created.
In step 145, the process locks the locator in order to prevent any changes which could be brought to the latter. As the Locator/Navigator may not be used during a started business process

In step 146 a test is performed for determining whether the locator is being disabled.

A test is then performed in step 147 for determining whether the mouse is over one item of the locator, and step 148 consists in the determination of a positive selection of the considered item by the user.

If the user appears to have selected the item, the process then proceeds with step 149 which is a test for determining whether the locator corresponds to the last item of the menu. If yes, the process proceeds to step B which leads to step 133 of figure 15. On the contrary, the process goes to step 150 which kills all the instances of the *Menu_item* and the heirs *Locator_items.*

It appears from the description above that the cloning process which is executed on the classes or objects of the library embedded into the document opened by the plug-in container permits the creation of a wide number of different items, elements and screens, including the very effective navigator-locator (illustrated in figures 17-19), where the usual HTML way would require the creation, storing and maintenance of a huge amount of different HTML pages. The process shows a great flexibility and ease for designing complex applications.

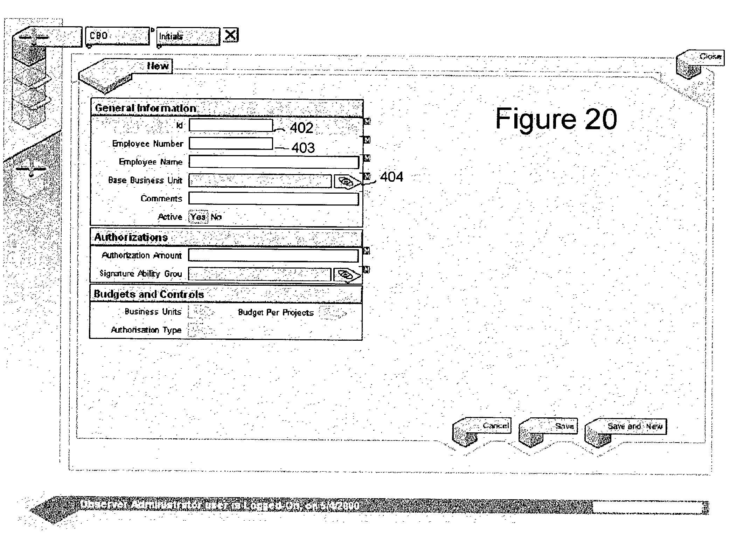

Figures 20 to 28 are illustrative examples of the wide variety of different screens which can be assembled in accordance with the cloning process described above, and based on the use of one unique contentscreen.swf document.

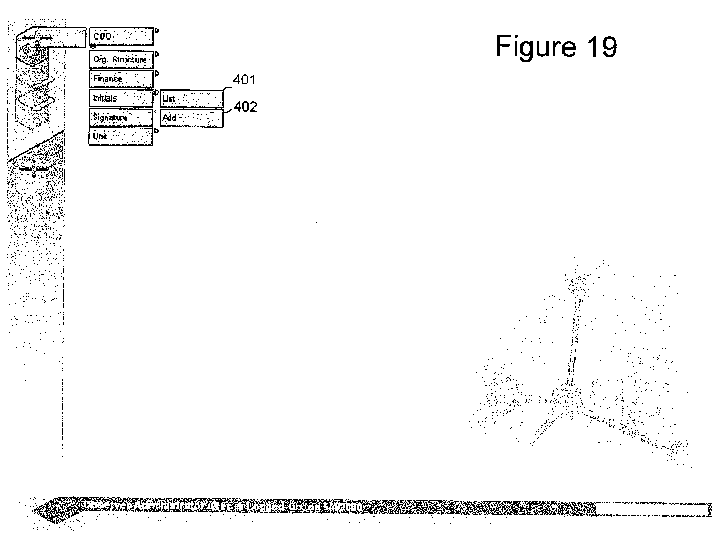

Figure 19 shows the development of the CBO *Menu_item, which* shows that item "initials" has two distinctive children: a first "list" item (for giving an exhaustive list of the employees) and a second "add" item (for entering the references to a new employee). As explained above, the drilling menu of figure 19 is assembled by means of one unique *Menu_item* which receives attributes and properties, including data extracted from the data base.

When the user selects the "Add" instance of the *Menu_item* class, the process proceeds to a new task. For that purpose, a new cloning process is being initiated by means of a new stream of Cloning Control Instructions (CCI) produced by the server, for the purpose of elaborating a new screen which is that shown in figure 20. A set of objects are assembled for that purpose within the plug-in container, and particularly two entry boxes 402 and 403 for respectively receiving Id and Employee number to be typed. Those two entry boxes are based on the same object but has different attributes and properties, including data extracted from the database, for fitting to the relevant information. For instance, entry box 402 may include validation procedure of a first type, while the entry box 403 may include the operation of checking whether only numerical figures are being typed... Figure 20 also shows a Combobox 404 which is also one instance created from a corresponding object within the library.

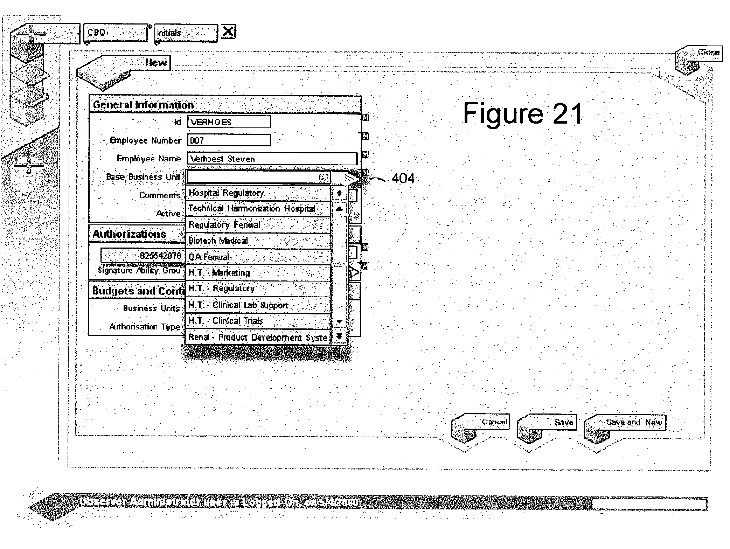

That combobox also receives attributes, operations and data which are controlled by the CCI instructions extracted from the property files or generated at real-time by the server. In particularly, the different options that are displayed when the user wish to make a selection, as illustrated in figure 21, is directly derived from the CCI instructions and, therefore, this entails the substantial advantage that any element can be individually modified by the process, contrary to what would be required in the usual HTML way.

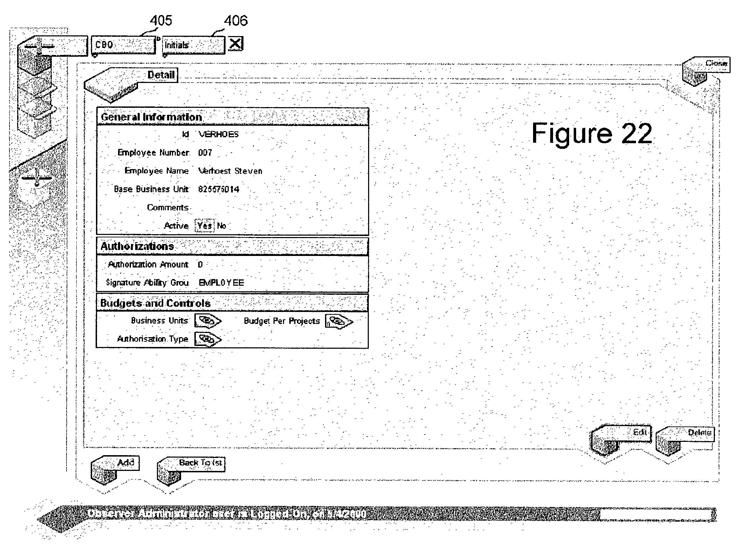

Figure 22 illustrates the entering of information in the objects assembled within the plug-in container for the purpose of updating the remote data base with a new employee. The figure also shows the role of the locator which continuously provides the user with a visual feedback (using a limited amount of space on the screen) for navigating within the data structure.

Should the user click on CBO (resp. "Initials") on the item 405 (resp. 406), he will directly cause the drill-down of the corresponding element. Particularly, the user may directly access the items which corresponds to the children of the CBO topmenu item without any need to reload intermediate pages. It should be noticed that the latter can only happen when the locator is enabled, in other words, the content need to be closed first. This is to prevent the using the navigator-locator as long as a business task is running.

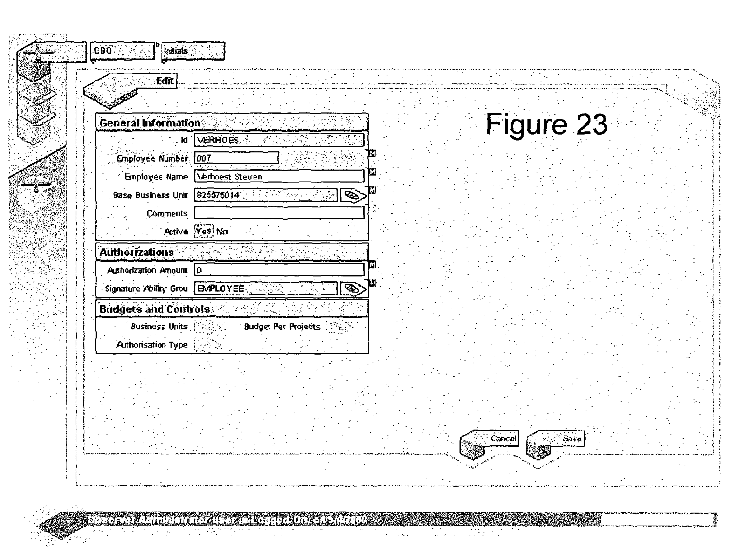

When the user selects "save " on the screen of figure 21, the cloning process is being triggered for the purpose of assembling a new screen (corresponding to a new task) which is the "details" screen, as shown in figure 23. It should be noticed that, for the purpose of assembling that screen, it is no longer necessary to transfer any information relevant to the last update brought to the database since the client machine has already received most of the information required for constructing the corresponding page: the name which was entered, the address etc... The new task to be performed (displaying an edit screen) and correspondingly the new screen to elaborate only requires a new cloning process for new duplications for the purpose of creating the new screen. Regarding the traffic which is exchanged between the client and the server for executing that cloning process, it should be noticed that the client only transmits the name of the appropriate property file which needs to be invoked on the server and only the result of the cloning process needs to be transmitted back to the server. Therefore, contrary to the usual HTML way, only a very limited amount of traffic via the network is being required for assembling graphic components on the client, including attributes, behavior and data. Only a few kilobytes - corresponding to the new CCI stream - need to be transferred between the assembling of screen of figure 21 and screen of figure 23.

Additionally, the different objects or instances can be individually amended in accordance with the cloning instructions loaded into the property files.

With the conventional HTML technique, if the user wishes to edit one particular field pertaining to one information being displayed, the browser must request a new page containing an "entry field". Obviously, the same data would be introduced in that new HTML page, which the server would have to send back to the browser. By eliminating the duplication of data transfert, this embodiment of the invention shows efficiency even when a low-speed modem connection is being used.

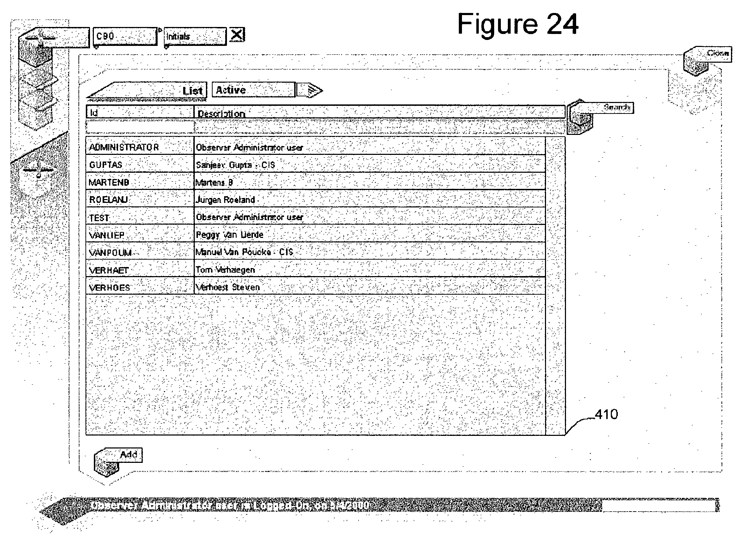

Figure 24 illustrates the automatic assembling of a "list" task which is initiated when the user clicks on item 401 of figure 19. Again, the listbox 410 is an object which is contained within a library and which is used for executing a cloning process under control of the CCI which are received from the server. The CCI determines the attributes, properties and data which are required for the assembling within the plug-in container. In the particular list box which is illustrated, the duplication was achieved with a CCI stream defining nine elementary lines, each one being assigned to one individual from the company etc...

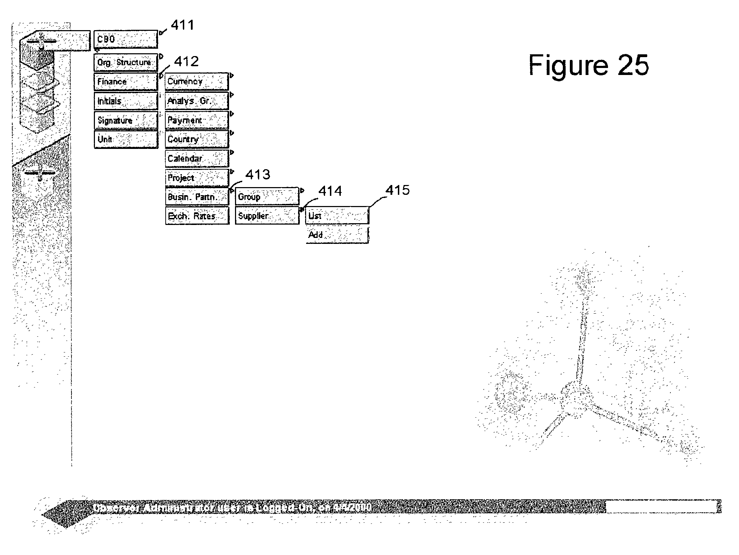

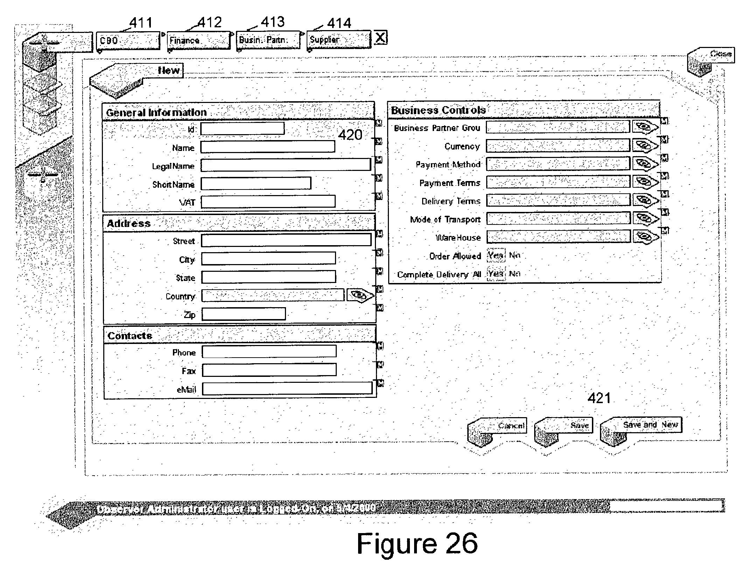

Figure 25 shows the drilling down menu which appears particularly elaborated and the figure 26 shows the action which is being executed when the user successively points on "CBO" (item 411), then on "finance" (item 412), then on "Business Partners" (item 413), then on "Supplier" (item 414) and, at last, on "add" (item 415). The generation of the different instances or items of the *Menu_item* class are automatically produced when the user successively moves the mouse over the different items. No selection is required at that stage, what is a great advantage with respect to the usual HTML way which requires intermediate loading of the different pages (requiring a long time) before the user is allowed to get an access to the information he wants. By use of the cloning process described above, and associated to the drilling menu, the latter may have a direct access to any point of the data structure. Even if he clicks on one item - for instance "add" item 415 -, thus causing the triggering of a new property file and the assembling of screen of figure 26, he still keep a total access to the data structure thanks to the locator - ie items 411 to 414 - which is created in accordance with the process of figure 16.

As was mentioned above, the same generic element of each type - be it a button, one combobox and one listbox for instance - can be used for assembling automatically a wide range of screens. There is thus given the possibility to adapt, in accordance with the cloning instructions defined in the property files, the different generic object to the wide range of situations which are needed for accessing the database. The size of an entry box and the different number of options are adapted to a particular need. Therefore the same graphical components can be used for producing all the different screens which will be displayed to the user. In addition to the logic for performing the corresponding behavior - for instance the action which is to be executed when the user clicks on a button or the opening of a serie of options for selection in a combobox -each generic graphical component receives the associated logic for achieving duplication and cloning of the object. Each generic object or component has the particular logic for performing the corresponding operation and behavior which is expected, but also receives the possibility of duplication and cloning as will be shown below. Therefore the same generic button will serve for creating two, three or more buttons on the screen if appropriate, as will be described hereinafter with more details.

In addition to the setup graphical library the invention uses a process for controlling the generating of the assembling of the objects on the screen which is based on instructions loaded into property files stored in the server. Each graphical object - be it a button, a combobox, a listbox - which is being displayed at one instant on the screen has received the name of one particular property file to which it is associated. When the user selects this object, the latter invokes the particular property file which is loaded in the server. This is achieved by means of the browser issuing a TCP/IP message forwarding the name of the property file to the server. The corresponding property file contains the set of instructions which are necessary for automatically assembling at runtime, by means of the plug-in allowing the vectorized generation tool, the different graphical objects required for the next screen that is associated with the action requested by the user. Among this set of instructions is the subset of graphical objects which involved in the assembling of the next screen.

## Claims

1. Process for automatically generating and controlling, in a client-server environment, a set of graphical objects which are to be assembled in a plug-in container associated to a web browser, said graphical objects forming a library of classes which can produce clones having attributes and operations which are to be assembled into said plug-in container and displayed on the client's computer screen, the cloning of said objects being under control of cloning instructions which are loaded into said server and required for corresponding elementary tasks,
said process involving the steps of:
- cloning under the control of one property file on the server a set of objects comprised within said library and which are involved by said task;
- assigning to each clone the attributes and operations required by said task, said operation comprising the triggering of one associated property file containing cloning control instructions (CCI) or producing at run-time said CCI instructions for the purpose of the execution of the next task;
- assembling the different clones into said plug-in container which is associated to the browser in the client's computer.

2. Process for assembling on a client a set of graphical objects in a client server environment, said library being compiled in order to produce a document which is dedicated to a container or plug-in associated with a browser in a client machine; said process involving the steps of:
- arranging a library of graphical objects having attributes, operations and cloning capability for the purpose of assembling a set of instances of said objects on the screen;
- arranging a set of property files loaded on the server for the purpose of loading the cloning instructions which are to be applied to some graphical object in order to produce said instances; and creating an association between each particular instance and one property file;
- causing the selection of one particular instance on the client screen to trigger the associated property file containing cloning control instructions (CCI) or producing at run-time said CCI instructions for the purpose of controlling a new cloning process and generating a new screen;
whereby the result of the cloning process executed under control of the cloning instructions causes the automatic assembling of the appropriate instances of the objects of said library.

3. Process according to claim 1 or 2 **characterized in that** the client-server application is used for accessing a data base and that the cloning instructions of the property files also controls the assignment of data extracted from the data base to the considered instances of the graphical objects.

4. Process according to claim 3 wherein said library comprises a *button* object which receives, during the cloning operation, attributes and operations for invoking, in response to the user making a selection, a corresponding set of CCI instructions on the server for the purpose of executing and controlling new cloning operations.

5. Process according to claim 3 wherein said library comprises a *combobox* object, which receives, during the cloning operation, attributes with data extracted from the data base, and also operations for particularly invoking, upon a selection from the user, a corresponding set of CCI instructions on the server for the purpose of executing and controlling new cloning operations.

6. Process according to claim 3 wherein said library comprises a *listbox* object which receives, during the cloning operation, attributes with data extracted from said data base, and also operations for particularly invoking, upon a selection from the user, a corresponding set of cloning instructions extracted from a property file or produced at run time by the server for the purpose of executing and controlling new cloning operations.

7. Process according to claim 3 wherein said library comprises an object being a container receiving attributes, including data from said data base, and operations for creating clones which also has cloning capabilities controlled by cloning instructions derived from a property file or produced at run-time for the purpose of executing and controlling new cloning operations ; each clone being arranged in a hierarchical manner on the screen so as to produce a set of instances aggregating a drilling-menu.

8. Process according to claim 7 each instance comprised in said aggregated drilling-menu receives an operation which causes the triggering of an associated property file or the production at run-time of an associated CCI string for controlling new cloning operations,
whereby there is provided a direct access to the data structure of said data base.

9. Process for producing a document in an application which is to be opened in a plug-in container of a web browser comprising the steps of:
- arranging a library of graphical components consisting in classes receiving attributes defining the corresponding position and object to be displayed with the associated data and operations which are to be performed upon selection by a user,
- arranging a set of property files stored on the server or produced at run time which contain cloning instructions for the purpose of producing instances of said graphical components of said library;
- producing one document to be opened by said plug-in container involving some instances which are cloned in accordance with the cloning instructions contained into the property files, and each of said instances receiving an operation which causes the triggering of one property file for controlling new cloning operations;
- invoking, upon selection of one particular instance, the associate property file in order to control the cloning process of new instances which are to be assembled on the screen.

10. Process according to claim 9 **characterized in that** the application is a data base application and wherein the operations which are executed when a user selects one instance causes an access to the data base and the triggering of the property file associated to said selected instance for causing a new cloning process and producing new instances of graphical objects with attributes, operations, including the extracted data from said data base.

11. Navigation process for exploring a data structure within a computer system, said data structure involving a set of hierarchical pages of data which can be accessed by the user; said process involving the steps of:
displaying a locator showing the history line of the page being currently displayed within the hierarchical structure;
in response to the user actuating a pointing cursor on one precise location of said locator, displaying a drilling menu which develops the structure with respect to the current position being pointed,
whereby the user may navigate within the data structure with a minimum of space required.

12. Navigation process according to claim 1 or 2 **characterized in that** it is used in a client-server application for accessing a remote database wherein the messages being exchanged between said client and said server comprises a coded representation of the hierarchical structure of data so that the latter is directly accessible to the client.

13. Apparatus comprising means for carrying out the process defined in steps 1 to 10.

14. A computer program product comprising computer program code stored on a computer readable storage medium for, when executed on a computer, performing all the steps of claim 1 to 10.

15. Process according to anyone of claim 1 to 12 for accessing a database via a Global Communication Network such as an Internet network or a WAP (Wireless Application Protocol) based network.

16. Process for automatically generating and controlling in a local machine a set of graphical objects, said graphical objects forming a library of classes which can produce clones having attributes and operations which are to be assembled into said plug-in container and displayed on the computer screen, the cloning of said objects being under control of cloning instructions which are loaded into the local machine or generated by a local process and which corresponds to a given task,
said process involving the steps of:
- cloning under the control of cloning instructions a set of objects comprised within said library and which are involved by said task;
- assigning to each clone the attributes and operations required by said task, said operation comprising the triggering of one associated property file containing cloning control instructions (CCI) or producing at run-time said CCI instructions for the purpose of the execution of the next task;
- assembling the different clones into said plug-in container which is associated to the browser in the client's computer.
